# EUROPEAN PATENT APPLICATION

(11) **EP 0 865 988 A1**
(43) Date of publication of application: **23.09.1998**
(21) Application number: 98830125.5
(22) Date of filing: 09.03.1998
(51) Int. Cl.: B65B 35/50, B65G 57/32

(54) **A device for stacking sorted products to be packaged**

(30) Priority: 12.03.1997 IT BO970139
(71) Applicant: DIMAC S.P.A., 40064 Ozzano dell'Emilia-Bologna (IT)
(72) Inventor: Bettini, Rodolfo, 40139 Bologna (IT); Ponti, Giuseppe, 40127 Quarto Inferiore (Bologna) (IT)
(74) Representative: Lanzoni, Luciano

(57) **Abstract**

The device for stacking groups (1) of cans (2) comprises a first belt (8) equipped with first drive means (9) designed to effect a change in position of the belt end (8a) that is downstream, relative to a feed direction (A), from a horizontal position to a raised one, that is to say inclined, in order to feed a single group (1) of cans alternately onto a second horizontal belt (10) that moves at a speed (V10) that is equal to the speed (V8) of the first belt (8), and respectively onto a third belt (11), whose active conveying branch (11r), concave in profile, is placed above the second belt (10) at a height (H) from the second belt, according to the height of the cans (2) in order to create a passage-way for the lower group of cans (1'); means (12) are envisaged for driving the third belt (11) at a speed (V11) which can be varied in order to obtain the simultaneous loading of an upper group of cans (1") and unloading of the previous upper group of cans (1") onto a group of lower cans (1') that are constantly moving forward on the second belt (10).

## Description

The present invention relates to a device for the stacking of continuously fed groups of sorted articles. It is particularly applicable on machines for packaging groups of products in boxes using shrink-wrap plastic film.

Currently in automatic machines of this kind the production line (which has the task of defining and sorting a group of products to then package them according to different criteria) is made up in the following way: a station which continuously feeds products, such as cans or similar of various shapes and sizes, placed upstream of the machine relative to the direction in which the cans are moving.

The latter move forward continuously in ordered rows one behind the other on a horizontally moving conveyor belt towards an intermediate sorting station designed to select the format of the groups of cans to be wrapped (that is to say the number). This intermediate station has a second horizontally moving conveyor belt at the end of which there is a station that feeds cardboard sheets which are used to make the base for each group of cans. The cardboard sheets are fed from a position below the machine. Finally there is a station for the wrapping of the sorted cans in a length of plastic film, preferably shrink-wrap.

Up until today, however, such machines have been designed in such a way as to be able to wrap a single group of products while there is no such machine capable of wrapping two separate groups of products stacked on top of each other and continuously fed from a sorting station.

The aim of the present invention is to create a device for stacking groups of sorted products to be packaged. It is designed in such away as to permit its use in conjunction with existing machinery by making small adjustments to said machinery without altering its ease of use, safety aspects and speed of production.

The technical features of the present invention, in accordance with the said aims, are clearly described in the claims herein and the advantages of the invention are more clearly shown in the detailed description below, with reference to the accompanying drawings which illustrate a preferred embodiment, and in which:
- figure 1 is a schematic side view, with some parts cut away in order to better illustrate others, of a machine for packaging groups of cans equipped with a stacking device made in accordance with the present invention;
- figure 2 is a schematic side view with some parts in cross section and others cut away of an enlarged detail of a part of figure 1, showing a second and third belt that make up part of the present invention
- figures 3, 4, 5 and 6 are all schematic side views of the device made according to the present invention in various operational stages of stacking groups of products.

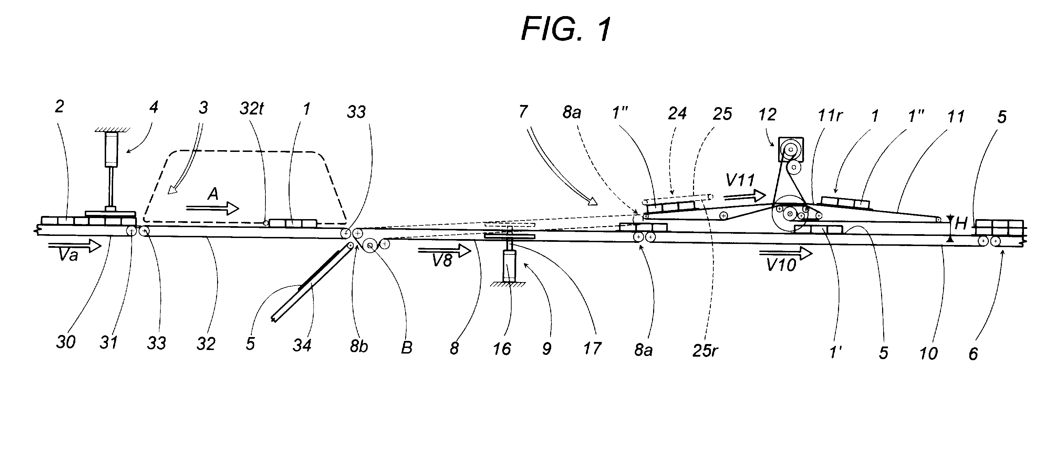

With reference to the accompanying drawings, and in particular to figure 1, the stacking device in question is applicable on all automatic machines for the wrapping of groups of products, which here have been shown as cans 2 purely by way of example, but it is obvious that any other type of product that can be stacked into at least two groups of the same product could make use of such a device without affecting the scope of the inventive concept.

The machine illustrated in figure 1, also by way of example, is made up of a group of stations (labelled 3) placed one after the other in a feed direction A and equipped with sorting means 4. The latter acts on said cans 2 to create groups 1 whose length can be predetermined, each group 1 being equipped with a sheet 5 to act as a base. Furthermore each group 1 is spaced from the previous and successive one according to a pre-set gap L, relative to feed direction A.

More precisely this first group of stations 3 is made up of a first horizontal sorting belt 8 closed in a loop around a first set of motorised pulleys 31 and is equipped, at its downstream end, relative to feed direction A, with the above mentioned sorting means 4 (here illustrated schematically in that they do not strictly form part of the invention).

These sorting means 4 act on cans 2 so that groups 1 of cans 2 can be passed one after the other from the first feed belt 30 to a second feed belt 32, which is closed in a loop around a second set of motorised pulleys 33, equipped with a set of crosspieces 32t for pushing the groups 1. A station 34, for feeding the above mentioned sheets 5, is located near the downstream end, relative to the feed direction A, of the second conveyor belt 32. The sheets 5 are fed from a line that is positioned below the line along which the groups 1 of cans 2 are fed so that the sheets 5 can be placed underneath said cans at an intermediate conveyor station 8 for the groups 1.

This intermediate station 8 constitutes part of a stacking station 7 made up of two other belts 8 and 10 (better described below). The intermediate station 8 is positioned between the above mentioned feed belt 32 and a station 6 for wrapping the groups 1 of cans 2 in a sheet of plastic film. (This station 6 is only partially illustrated in that it does not strictly form part of the invention).

In more detail figure 1 shows that the first belt 8 is equipped with first drive means 9 to move the downstream end 8a of the first belt 8, relative to the feed direction A, from a horizontal to a raised position, that is to say inclined position in order to alternately feed a single group of cans onto a second and third belt 10 and 11.

More precisely the above mentioned first drive means 9 consist of a piston 16 positioned underneath the first belt 8. The free end of the piston's stem 17 is connected to the first belt 8 in order to obtain the above mentioned horizontal and inclined positions. In order to achieve these positions the upstream end 8b, relative to the feed direction A, of the first belt 8 is pivoted at B to a load-bearing structure 20 attached to the machine.

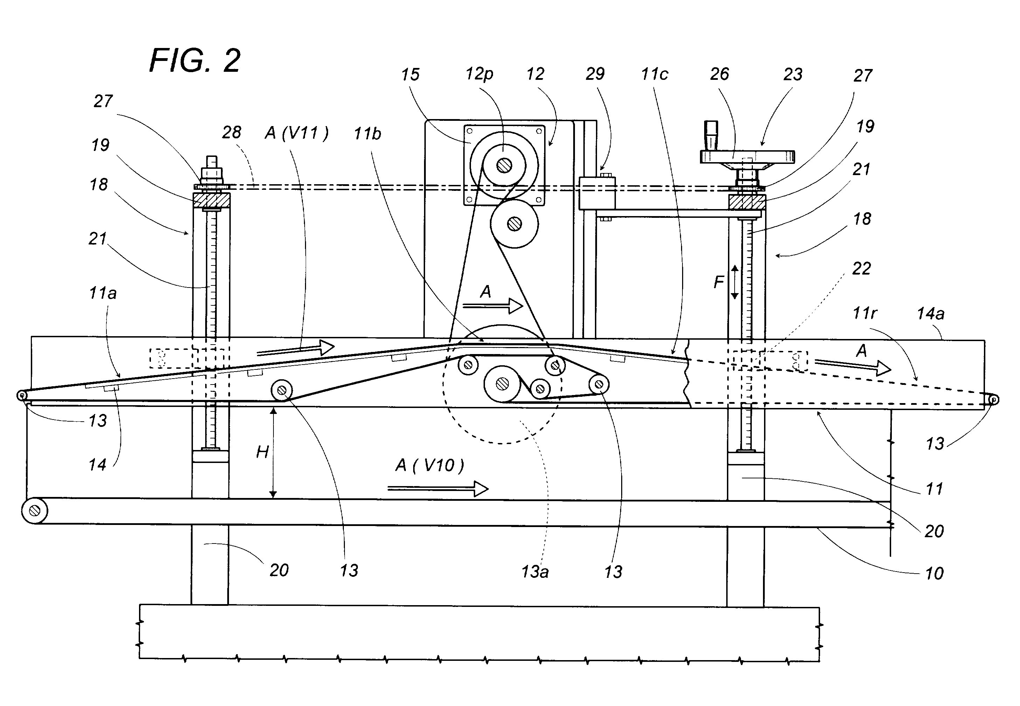

As can be seen in figures 1 and 2 the second belt 10 extends horizontally between the first belt 8 and the above mentioned wrapping station 6 and moves at a constant speed V10 that is equal to the speed V8 of the first belt 8. This second belt 10 extends in such a way that its downstream end is connected to the above mentioned wrapping station 6.

Still looking at figure 2, the above mentioned third belt 11 is positioned above the second belt 10 at a height H that can be altered according to the height of the cans 2 in order to create a passage-way for the lower set of cans 1' which have been fed from the first belt 8.

The active conveying branch 11r of the third belt 11 is concave in profile in that its outline is defined by a support structure which divides the active conveying branch 11r into three uninterrupted portions: the first, infeed portion 11a is placed upstream relative to feed direction A and is inclined upwards; the second, intermediate portion 11b extends in a straight line parallel to the second belt 10, while the third, outfeed portion 11c, located downstream of the previous portion, is inclined downwards.

The third belt 11 is connected to a second drive means 12 designed to move the third belt at a variable speed V11 so as to permit the loading of an upper group 1" of cans in arrival from the first belt 8 and the simultaneous unloading of the previous upper group of cans 1" onto a group of lower cans 1', that are constantly moving forward on the second belt 10, at the downstream end of the second belt.

These second drive means 12 consist of a variable timing drive (as, for example, a conventional brushless motor.) connected, via a second return pulley 12p, to a first pulley 13a for driving the third belt 11 forming part of a plurality of pulleys 13 around which the third belt 11 is looped.

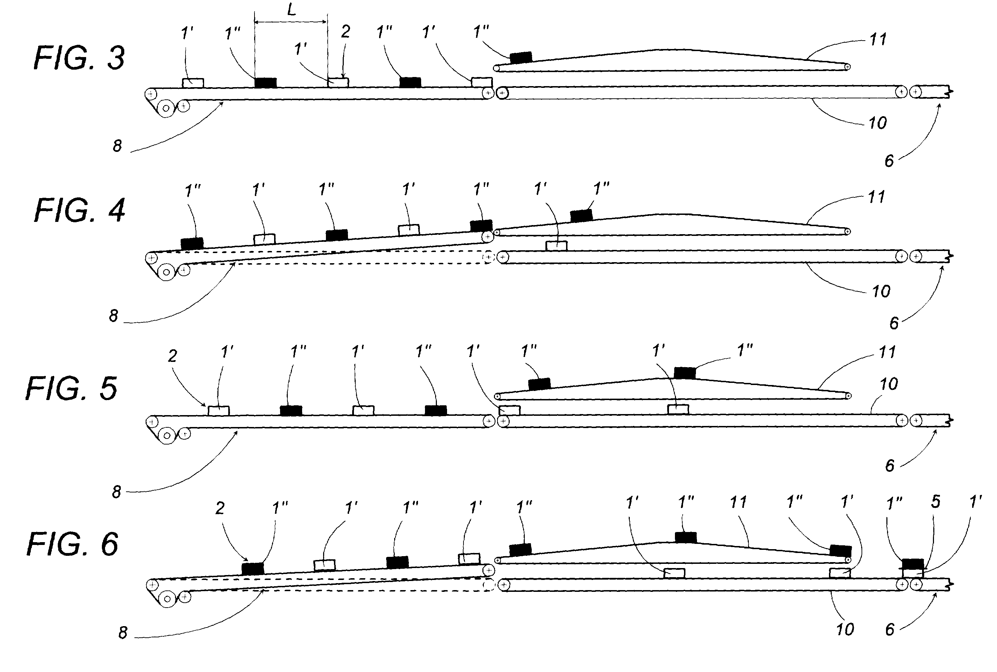

As can be seen in figures 3 to 6 the speed V11 at which the third belt 11 moves depends upon the position of the group 1" of cans which is loaded onto the third belt 11; in the illustrated sequence one can imagine the beginning of a cycle in which:
- in figure 3 a group of cans 1" has just been loaded onto the first portion 11a of the third belt 11 which at that moment is moving at a speed V11 that is equal to the speed V10 of the second belt 10 onto which is being loaded in turn a group of cans 1',
- in figure 4 it can be seen that the speed V11 of the third belt 11 is gradually reduced compared to the speed V10 of the second belt 10, thus slowing down the upper group 1", which has passed from the infeed portion 11a to the intermediate portion 11b, thus compensating the distance between the lower group 1' and the upper group 1", that is to say the above mentioned distance L between the two at the moment of sorting upstream;
- in figures 5 and 6 the speed V11 of the third belt 11 is gradually increased as the group 1" moves between the intermediate portion 11b and the outfeed portion 11c until it is once again equal to the speed V10 of the second belt 10 in order to simultaneously load the next upper group 1" (upstream) and stack the exiting upper group 1" onto the lower group 1' which is moving forward at a constant speed V10 and now finds itself exactly at the point of exit of the upper group, thus forming the stacked group for packaging as shown in figures 1 and 6.

Figure 2 shows the means 18 for adjusting the height H of the third belt 11 relative to the second belt 10. These means are made up of a plurality of vertical arms 19 which are placed on either side of the third belt 11 and joined to the above mentioned fixed load bearing structure 20 of the machine. These arms 19 support threaded rods 21, that can be rotated on their axes and screwed to their respective threaded bushes 22 which are attached to the sides 14a of the load support structure 14 of the third belt 11.

In order to adjust the height H of the third belt 11 means 23 for activating the rotation of the rods 21 are envisaged. These might consist of a mechanism made up of a toothed wheel 27, joined to the upper end of each of the two rods 21, onto which is engaged a chain 28 that is closed in a loop around said rods.

One of the rods 21 is equipped with a crank 26 that is connected to its toothed wheel 27. The rotation of this crank, resulting in the movement of the chain 28, allows the whole of the third belt 11 to be raised or lowered (see arrow F in figure 2).

This adjusting movement is transmitted to second drive means 12 which are rigidly connected to the third belt 11 and are supported by guides 29.

Obviously the crank 26 can be substituted by an automatic drive system connected to the machine's central control unit. Such a system might envisage, for example, the use of an encoder to check the position of the third belt 11.

Returning to figure 1, the numeral 24 indicates the means for stabilising the upper groups 1" of cans 2 with which the third belt can be equipped. By way of example these stabilisation means have been shown as a fourth belt 25 (shown as a dashed line), positioned above the first portion 11a of the active branch 11r, whose lower active branch 25r is parallel to the first portion: this prevents the cans 2 from moving slightly out of position on the upwards incline of the portion 11a.

Such a device, therefore, achieves the stated aims thanks to an extremely simple stacking structure with low application costs and without necessarily having to alter either the general make-up of the wrapping machine or the positioning of the existing stations of conventional machines. The simplicity of construction and above all the use of a variable timing drive ensure that the rate of productive output over time is maintained.

The present invention, thus designed for the said objects, may be subject to numerous modifications and variations, all encompassed by the original design concept. Moreover, all components may be replaced with technically equivalent parts.

## Claims

1. A device for the stacking of continuously fed and sorted groups of products, in particular groups (1) of cans (2) arranged in lines either crosswise, forming a front, or lengthwise; a device that can be fitted to machinery comprising a first group (3) of stations lined up one after the other in a feed direction (A), equipped with means (4) for sorting the cans (2) and designed to define said groups (1) of cans (2), the groups (1) being provided with a sheet (5) as a base, having a pre-set length and being separated from one another according to a pre-set spacing, relative to said feed direction (A); the groups (1) of cans (2) being sent in the direction of a station (6) for the wrapping in plastic film of said groups (1) equipped with said base sheet (5), the device being characterised in that it envisages a stacking station (7) placed between said first group (3) of sorting stations and said wrapping station (6) comprising:
- a first belt (8) equipped with first drive means (9) designed to allow the movement of at least the downstream end (8a) of the first belt (8), relative to said feed direction (A), from a horizontal position to a raised position, that is to say inclined, in order to alternately feed a single group (1) of cans onto
- a second horizontal belt (10), placed between said first belt (8) and said wrapping station (6), travelling at a speed (V10) that is equal to the speed (V8) of said first belt (8) and extending in a way that allows it to meet up with said wrapping station (6), and respectively onto
- a third belt (11) that has at least its active conveying branch (11r) concave in profile, and said third belt (11) being located above said second belt (10) at an adjustable height (H) relative to said second belt (10) and according to the height of the cans (2) in order to create a passage-way for the lower group of cans (1') fed from said first belt (8); drive means (12) being envisaged to act on said third belt (11) and being designed to enable the latter to travel at variable speed (V11) allowing the loading of an upper group of cans (1") arriving from said first belt (8) and the simultaneous unloading of a previous upper group of cans (1") onto the lower group of cans (1') which are constantly moving forward on said second belt (10) at the downstream end of the second belt.

2. The device according to claim 1, characterised in that said third belt (11) is closed in a loop around a plurality of parallel pulleys (13), one of which (13a) is attached to said second drive means (12); said third belt being supported by a structure (14) shaped in such a way as to divide the active conveying branch (11r) into three portions without interruption of which the first (11a) infeed portion, at the upstream end relative to said feed direction (A), is inclined upwards, the second intermediate portion (11b) moves forward in a straight line parallel to said second belt (10), and the third outfeed portion (11c), downstream of the previous portion, relative to the feed direction (A), is inclined downwards.

3. The device according to claim 2, characterised in that said second drive means (12) consist of a variable timing drive (15) designed to allow the upper group (1") of cans (2) to travel on the active conveying branch (11r) at speed (V11) which is respectively:
- almost equal to the speed (V10) of said second belt (10) at least at the entry of said upper group (1") of cans (2) to the first portion (11a) of the active conveying branch (11r);
- less than the speed (V10) of said second belt (10) when the upper group (1") of cans (2) passes onto the rest of the first portion (11a) and onto said second portion (11b), and once again
- almost equal to the speed (V10) of said second belt (10) when the upper group (1") of cans (2) passes onto part of said third portion (11c) of the active conveying branch (11r) and when said group of upper cans exits.

4. The device according to claim 1, characterised in that said first drive means (9) consist of a piston (16) positioned below said first belt (8) and connected, with the free end of its own stem (17), to said first belt (8) in order to create the incline of the free end (8a) of said first belt (8); the latter's upstream end, relative to said feed direction (A), being pivoted at (B) to a load-bearing structure of the machine.

5. The device according to claim 1, characterised in that said third belt (11) is equipped with means (18) for adjusting its height (H) relative to the second belt (10) and connected to and acting upon the third belt (11) and on the second drive means (12).

6. The device according to claim 5, characterised in that said means (18) for adjusting the height (H) of the third belt (11) consist of a plurality of vertical arms (19) placed on either side of the third belt (11), joined to a fixed load bearing structure (20), and supporting respective threaded rods (21) that can rotate on their axes and are screwed to respective threaded bushes (22) joined to sides (14a) that form part of a support structure (14) of the third belt (11); means (23) for activating the rotation of the rods (21) being envisaged to act upon the latter and designed to allow, upon external command, a variation in the position of the third belt (11) relative to the second belt (10).

7. The device according to claim 1, characterised in that the third belt (11) is equipped with means (24) for stabilising the upper groups (1") of cans (2) as said groups travel along the active conveying branch (11r).

8. The device according to claim 2, characterised in that the third belt (11) is equipped with means (24) for stabilising the upper groups (1") of cans (2) as said groups travel along the active conveying branch (11r); said stabilisation means (24) consisting of a fourth belt (25) placed at least above the first portion (11a) and having its lower active branch (25r) parallel to said first portion.

9. A method for the stacking of continuously fed groups of sorted products, in particular groups (1) of cans (2) arranged in lines either crosswise, forming a front, or lengthwise; a device that can be fitted to machinery comprising a first group (3) of stations lined up one after the other in a feed direction (A), equipped with means (4) for sorting the cans (2) and designed to define said groups (1) of cans (2), the groups (1) being provided with a sheet (5) as a base, having a pre-set length and being separated from one another according to a pre-set spacing, relative to said feed direction (A); the groups (1) of cans (2) being sent in the direction of a station (6) for the wrapping in plastic film of said groups (1) equipped with a base sheet (5), the method being characterised in that it comprises a second (10) and a third belt (11) running parallel and placed one above the other at a distance (H) that is no less than the height of the cans (2), and downstream of a first feeding belt (8), relative to said feed direction(A), and in that it comprises the following steps:
- feeding a first group (1") of cans (2) to said third belt (11);
- feeding a second group (1') of cans (2), following on from said first upper group (1") of cans (2), to said second belt (10);
- slowing down said first upper group (1") of cans (2) in such a way as to relatively position the two groups of cans on the same vertical line at least when the first upper group (1") of cans (2) exits from said third belt (11) so that the first group (1") of cans (2) is placed on top of the second group (1') of cans (2).

10. The method according to claim 9, characterised in that, the step of feeding the first group (1") to the third belt (11) is carried out at a speed (V11) that is equal to a speed (V10) at which the second belt (10) travels.

11. The method according to claim 9, characterised in that, after the slowing down step there is envisaged a further step of accelerating the first group (1") so that said first group is moving at a speed (V11) that is equal to the speed (V10) of the second group (1') as the first group (1") is about to exit from the third belt (11) in order to allow the simultaneous feeding of the next first group (1") of cans (2).
